# EUROPÄISCHE PATENTSCHRIFT

(11) **EP 3 041 654 B1**
(45) Veröffentlichungstag und Bekanntmachung des Hinweises auf die Patenterteilung: **08.08.2018**
(21) Anmeldenummer: 14761295.6
(22) Anmeldetag: 25.08.2014
(51) Int. Cl.: B29C 45/14, B29C 33/12, B29K 105/12

(54) **VERFAHREN ZUR HERSTELLUNG EINES EINLEGERS FÜR EIN SPRITZGUSSBAUTEIL, EINLEGER FÜR EIN SPRITZGUSSBAUTEIL SOWIE SPRITZGUSSBAUTEIL**
METHOD FOR PRODUCING AN INSERT FOR AN INJECTION MOLDED COMPONENT, INSERT FOR AN INJECTION MOLDED COMPONENT AND INJECTION MOLDED COMPONENT
PROCÉDÉ DE PRODUCTION D'UNE PIÈCE D'INSERTION POUR UN ÉLÉMENT DE MOULAGE PAR INJECTION, PIÈCE D'INSERTION POUR ÉLÉMENT DE MOULAGE PAR INJECTION, ET ÉLÉMENT DE MOULAGE PAR INJECTION

(30) Priorität: 06.09.2013 DE 102013217811
(43) Veröffentlichungstag der Anmeldung: 13.07.2016
(73) Patentinhaber: Bayerische Motoren Werke Aktiengesellschaft, 80809 München (DE)
(72) Erfinder: SCHÜRMANN, Helmut, 67133 Maxdorf (DE); FABER, Jakob, 64289 Darmstadt (DE); SCHULITZ, Matthias, 64285 Darmstadt (DE)
(86) Internationale Anmeldenummer: PCT/EP2014/067981
(87) Internationale Veröffentlichungsnummer: WO 2015/032643

(56) Entgegenhaltungen:
- WO-A1-2007/098869
- WO-A1-2008/134062
- WO-A1-2012/085070
- WO-A1-2014/058884
- DE-A1- 2 704 879
- DE-A1-102009 016 177
- US-A1- 2012 049 409

## Beschreibung

Die vorliegende Erfindung betrifft ein Verfahren zur Herstellung eines Einlegers für ein Spritzgussbauteil mittels eines Formgebungsverfahrens, wobei der Einleger zumindest einen Faserverbundwerkstoff umfasst. Ferner betrifft die Erfindung einen Einleger zumindest umfassend einen Faserverbundwerkstoff für ein Spritzgussbauteil sowie ein Spritzgussbauteil, aufweisend einen Einleger, wobei der Einleger zumindest einen Faserverbundwerkstoff aufweist.

### STAND DER TECHNIK

Spritzgussbauteile werden in vielen Bereichen der Technik eingesetzt. Durch eine passende Gestaltung eines Hohlraumes in einem Spritzgussformwerkzeug ist es möglich, eine nahezu unbegrenzte Vielfalt an realisierbaren Bauteilformen zu erhalten. Mögliche Ausgestaltungsformen von derartigen Spritzgussbauteilen sind beispielsweise aus der DE 10 2009 016 177 A1 bekannt.

Um die Eigenschaften derartiger Spritzgussbauteile zu verändern, insbesondere zum Beispiel die Festigkeit eines Spritzgussbauteils zu erhöhen, ist es bekannt, Einleger zu verwenden. Diese Einleger werden bei der Herstellung des Spritzgussbauteils im Spritzgussvorgang mit Spritzgussmaterial umspritzt. Beispielsweise kann durch die Verwendung von Einlegern aus einem Faserverbundwerkstoff die Festigkeit dieses Faserverbundwerkstoffes auf das Spritzgussbauteil, zumindest teilweise, übertragen werden.

Bei der Herstellung derartiger Spritzgussbauteile mit Einlegern muss sichergestellt werden, dass beim Spritzgussvorgang der Einleger innerhalb des Spritzgussformwerkzeugs nicht verschwimmt. Bei einem Verschwimmen des Einlegers wird dieser aus seiner vorgesehen Position innerhalb des Spritzgussbauteils verschoben. Ungewollte Effekte, wie beispielsweise eine verminderte Festigkeit des Spritzgussbauteils können die Folge eines derartigen Verschwimmens des Einlegers sein. Um dies zu verhindern ist beispielsweise aus der WO 2014 / 058 884 A1 bekannt, dass zusätzlich zu einem Einleger für ein Spritzgussteil zusätzlich zumindest ein Stützelement zur Positionierung des Einlegers im Spritzgussbauteil während dessen Herstellung vorgesehen ist.

Es ist bekannt, dieses Problem durch in das Spritzgussformwerkzeug integrierte Schieber oder Haltestifte zu lösen. Die beweglichen Stifte fixieren den Einleger formschlüssig, bis während des Spritzgussvorgangs ein Großteil des Spritzgussmaterials eingespritzt ist und der Einleger dadurch fixiert ist. Daraufhin werden die Stifte zurückgezogen und der restliche Raum des Spritzgussformwerkzeugs gefüllt. Alternativ kann der Einleger auch durch das Spritzgussformwerkzeug selbst formschlüssig fixiert werden.

So ist beispielsweise aus der WO 99/52703 bekannt, einen Einleger durch spezielle Vorrichtungen, wie beispielsweise Fixierelemente, Umlenkelemente, Halteelemente und/oder Spannelemente, im Spritzgussformwerkzeug zu fixieren. Alternativ ist auch eine Fixierung durch die Geometrie des Spritzgussformwerkzeugs selbst oder durch ein Anschmelzen des Einlegers an einer Wand des Spritzgussformwerkzeugs bekannt.

Nachteilig bei den bekannten Lösungen ist jedoch, dass zum einen Spritzgussformwerkzeuge, die verschiebbare Elemente zum Fixieren eines Einlegers aufweisen, die Komplexität des Spritzgussformwerkzeugs deutlich erhöhen. Der Zeit- und Kostenaufwand, der zum Betreiben eines derartigen Spritzgussformwerkzeugs nötig ist, ist daher erhöht. Ferner bilden sich zur Fixierung eines Einlegers vorgesehene feste Konturen und Vorsprünge des Spritzgussformwerkzeugs auf der Außenkontur des resultierenden Spritzgussbauteils ab. Dies kann zu unerwünschten Kerbspannungen führen, die zu einer Verminderung der Festigkeit des Bauteils führen können. Ferner sind ebene Oberflächen unter Umständen nicht realisierbar, wodurch die Gestaltungsfreiheit für das Spritzgussbauteil eingeschränkt ist.

### OFFENBARUNG DER ERFINDUNG

Es ist daher Aufgabe der Erfindung, die voranstehend beschriebenen Nachteile bekannter Verfahren zur Herstellung eines Einlegers für ein Spritzgussbauteil zu beheben. Insbesondere ist es Aufgabe der Erfindung, ein Verfahren zur Herstellung eines Einlegers für ein Spritzgussbauteil, einen Einleger für ein Spritzgussbauteil sowie ein Spritzgussbauteil bereitzustellen, die in einfacher und kostengünstiger Weise die Herstellung eines Einlegers und des den Einleger beinhaltenden Spritzgussbauteils verbessern, wobei insbesondere ein Verschwimmen des Einlegers in einem Spritzgussformwerkzeug verhindern wird.

Die voranstehende Aufgabe wird gelöst durch ein Verfahren zur Herstellung eines Einlegers für ein Spritzgussbauteil mit den Merkmalen des unabhängigen Anspruchs 1, durch einen Einleger für ein Spritzgussbauteil mit den Merkmalen des Anspruchs 6 sowie durch ein Spritzgussbauteil mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren zur Herstellung eines Einlegers für ein Spritzgussbauteil beschrieben sind, selbstverständlich auch in Zusammenhang mit dem erfindungsgemäßen Einleger sowie dem erfindungsgemäßen Spritzgussbauteil und jeweils umgekehrt, sodass bezüglich der Offenbarung zu den einzelnen Erfindungsaspekten stets wechselseitig Bezug genommen wird beziehungsweise werden kann.

In einem ersten Aspekt der Erfindung wird die Aufgabe durch ein Verfahren zur Herstellung eines Einlegers für ein Spritzgussbauteil mittels eines Formgebungsverfahrens, wobei der Einleger zur Herstellung des Spritzgussbauteils mit Spritzgussmaterial umspritzbar ist, der Einleger zumindest umfassend einen Faserverbundwerkstoff, gelöst. Insbesondere ist das erfindungsgemäße Verfahren dadurch gekennzeichnet, dass beim Formgebungsverfahren dem Einleger zumindest ein Stützelement zum formschlüssigen Halten des Einlegers in einem Spritzgussformwerkzeug angeformt wird, wobei das zumindest eine Stützelement beim Formgebungsverfahren monolithisch angeformt wird und zumindest teilweise aus Komponenten des Einlegers ausgebildet wird..

Durch einen Einleger, der einen Faserverbundwerkstoff, beispielsweise einen glas- oder kohlenstofffaserverstärken Kunststoff (GFK beziehungsweise CFK), umfasst, ist es möglich, ein Spritzgussbauteil, insbesondere die mechanischen Eigenschaften des Spritzgussbauteils wie beispielsweise Festigkeit und Steifigkeit, zu verbessern. Dazu wird der Einleger in das Spritzgussformwerkzeug eingelegt und mit dem Spritzgussmaterial umspritzt. Erfindungsgemäß ist vorgesehen, dass bei der Herstellung des Einlegers diesem bei einem Formgebungsverfahren zumindest ein Stützelement angeformt wird. Das Formgebungsverfahren kann dabei beliebig ausgestaltet sein, beispielsweise als ein (Spritz-)Gießen, Pressen oder Walzen. Insbesondere ist das Formgebungsverfahren derart ausgestaltet, dass das dem Einleger angeformte Stützelement zumindest teilweise aus Komponenten des Einlegers, beispielsweise Fasern und/oder Matrixwerkstoff, ausgebildet ist. Dadurch ist bei der nachgeschalteten Herstellung des Spritzgussbauteils ermöglicht, dass der Einleger in dem verwendeten Spritzgussformwerkzeug durch das zumindest eine Stützelement formschlüssig gehalten ist. Selbstverständlich ist dabei eine Anpassung des angeformten Stützelements an das gewünschte Spritzgussbauteil beziehungsweise an das Spritzgussformwerkzeug vorzunehmen. So können beispielsweise auch mehrere Stützelemente, auch in verschiedenen Geometrien, am Einleger angeformt werden. Eine Fixierung des Einlegers durch bewegliche Teile oder Vorsprünge des Spritzgussformwerkzeugs ist nicht notwendig. Das Spritzgussformwerkzeug kann daher einfacher und somit kostengünstiger gefertigt und betrieben werden. Darüber hinaus sind auch Einschränkungen in der Gestaltung des Spritzgussbauteils aufgrund von Fixierungsaufgaben des Spritzgussformwerkzeugs nicht mehr vorhanden. So ist zum Beispiel eine ebene Gestaltung der Außenkontur des resultierenden Spritzgussbauteils möglich. Kerbspannungen an Kanten, die durch Vorsprünge am Spritzgussformwerkzeug entstehen, können so vermieden werden. Ferner erhöht sich durch das zumindest eine Stützelement die effektive Fläche zwischen Einleger und Spritzgussmaterial. Die Festigkeit der Verbindung zwischen dem Einleger und dem Spritzgussmaterial kann dadurch erhöht werden. Ferner wird dadurch auch ein kaltes Umspritzen des Einlegers zum Spritzgussbauteil ermöglicht. Das zumindest eine Stützelement bildet mit dem Spritzgussmaterial einen Formschluss, der Einleger ist somit innerhalb des Spritzgussbauteils formschlüssig gehalten. Ein Stoffschluss zwischen Einleger und Spritzgussmaterial, wie er zum Beispiel durch ein Aufschmelzen der Oberfläche des Einlegers bei einem Spritzgussverfahren bei hohen Temperaturen erreicht werden kann, ist somit nicht mehr nötig. Dies stellt eine deutliche Vereinfachung der Herstellung des resultierenden Spritzgussbauteils dar.

Ferner ist bei einem erfindungsgemäßen Verfahren vorgesehen, dass das zumindest eine Stützelement beim Formgebungsverfahren monolithisch angeformt wird und zumindest teilweise aus Komponenten des Einlegers ausgebildet wird. Ein einstückig an den Einleger angeformtes Stützelement ist mit diesem stoffschlüssig verbunden. Bei einer monolithischen Anformung des Stützelements wird zudem der gesamte Einleger in einem gemeinsamen Arbeitsschritt durch das Formgebungsverfahren geformt. Weitere Formgebungsschritte sind nicht erforderlich. Dadurch können insbesondere Herstellungszeit und damit auch Herstellungskosten eingespart werden.

Auch kann bei einem erfindungsgemäßen Verfahren vorgesehen sein, dass ein Faserverbundwerkstoff aus Fasern und einem Matrixwerkstoff, insbesondere einem thermoplastischen oder duroplastischen Matrixwerkstoff, als Rohling verwendet wird und dass an den Rohling das zumindest eine Stützelement durch Verpressen mit wenigstens einem Presswerkzeug angeformt wird, wobei das wenigstens eine Presswerkzeug zur Anformung des zumindest einen Stützelements zumindest eine Vertiefung und/oder einen Vorsprung aufweist. Besonders bevorzugt kann dies bei einer Verwendung von Rohlingen angewendet werden, die als Band und/oder Tape, insbesondere als unidirektionales Band und/oder Tape, vorliegen. Selbstverständlich können dabei auch ein Stapel derartiger Bänder oder Tapes als Rohling verwendet werden. Durch das Verpressen kann in diesem Fall zusätzlich noch eine, insbesondere stoffschlüssige, Verbindung der einzelnen Lagen des Rohlings erzeugt werden. Hierbei kann bei Verwendung eines Presswerkzeugs mit zumindest einer Vertiefung insbesondere vorgesehen sein, dass der Matrixwerkstoff die Vertiefung beim Pressen ausfüllt und somit das zumindest eine Stützelement nach dem Aushärten und/oder Erkalten durch den Matrixwerkstoff gebildet ist. Bei Verwendung eines Vorsprungs kann vorgesehen sein, dass der Vorsprung sich durch den Rohling durchdrückt und somit auf der gegenüberliegenden Seite des fertigen Einlegers ein Stützelement anformt. Durch die Wahl des Presswerkzeuges ist somit eine Vielzahl von Geometrien für Einleger mit angeformten Stützelementen möglich. Bevorzugt kann diese Ausgestaltungsform eines erfindungsgemäßen Verfahrens Anwendung finden, wenn die Herstellung des Einlegers nach der Bearbeitung im Presswerkzeug abgeschlossen ist und der Matrixwerkstoff sich verfestigen kann. Besonders bevorzugt kann dabei ein thermoplastischer Matrixwerkstoff verwendet werden. In diesem Fall kann beispielsweise der Rohling als unidirektionales Tape-Halbzeug, aufweisend eine oder mehrere Schichten mit Fasern und thermoplastischen Matrixwerkstoff, vorliegen. Auch kann ferner vorgesehen sein, das Presswerkzeug, zumindest abschnittsweise, mit einer Heizung zu versehen, um den thermoplastischen Matrixwerkstoff zusätzlich aufzuschmelzen. Solange der Rohling verformbar ist, kann jedoch auch ein Rohling aus Fasern und einem duroplastischen Matrixwerkstoff verwendet werden. Auch in dieser Ausgestaltungsform eines erfindungsgemäßen Verfahrens ist somit eine besonders breite Einsetzbarkeit ermöglicht.

In einer Weiterentwicklung eines erfindungsgemäßen Verfahrens kann ferner vorgesehen sein, dass das Verpressen ein semi-kontinuierliches oder kontinuierliches Verpressen ist. Ein semi-kontinuierliches Verpressen kann dabei beispielsweise ein Verpressen in einem Presswerkzeug sein, in das sequentiell die zu verpressenden Rohlinge eingelegt werden. Nach jedem Pressvorgang kann in diesem Fall beispielsweise aus einem Rohling jeweils ein oder mehrere Einleger gefertigt werden. Insbesondere Einleger mit verwinkelten Geometrien können auf diese Weise hergestellt werden. Ein kontinuierliches Verpressen kann beispielsweise mit Walzen als Presswerkzeug durchgeführt werden, denen ein Rohling zugeführt wird. Dieser wird dann in den Walzen zu einem Strang von Einlegern gepresst, der im Anschluss in die einzelnen Einleger zerteilt wird. Insbesondere einfache Einleger mit linearen Geometrien können auf diese Weise in großer Stückzahl hergestellt werden.

Darüber hinaus kann ferner gemäß einer Weiterentwicklung ein erfindungsgemäßes Verfahren dahingehend ausgestaltet sein, dass vor dem Verpressen zusätzlich eine verpressbare Kunststoffschicht auf eine Oberfläche des Rohlings aufgebracht wird. Dadurch wird beim Verpressen das zumindest eine Stützelement vorwiegend aus dem Material der zusätzlichen verpressbaren Kunststoffschicht gebildet. Dies hat zum einen den Vorteil, dass weniger Matrixwerkstoff für das Ausformen des zumindest einen Stützelements nötig ist. Zum anderen kann auf diese Weise das Material, aus dem das zumindest eine Stützelement ausgeformt wird, gezielt und unabhängig vom Matrixwerkstoff des Faserverbundwerkstoffs gewählt werden.

Gemäß einer bevorzugten alternativen Ausgestaltung eines erfindungsgemäßen Verfahrens kann vorgesehen sein, dass Fasern in ein Formwerkzeug mit zumindest einer Ausbuchtung eingelegt werden und mit einem Matrixwerkstoff, insbesondere einem thermoplastischen oder duroplastischen Matrixwerkstoff, umgossen werden, wobei das zumindest eine Stützelement durch Ausfüllen der zumindest einen Ausbuchtung mit dem Matrixwerkstoff gebildet wird. Auf diese Weise ist es möglich, bereits bei der Herstellung des Faserverbundwerkstoffes, bei der die Fasern durch den Matrixwerkstoff verbunden und in diesen eingebettet werden, das zumindest eine Stützelement am Einleger anzuformen. Das Stützelement wird dabei aus dem Matrixwerkstoff gebildet. Dabei ist es unerheblich, ob der Matrixwerkstoff thermoplastisch, das heißt unter Wärmezufuhr verflüssigbar, oder duroplastisch, das heißt nach dem Aushärten nicht mehr schmelzbar, ist. In einer möglichen Anwendung wird diese Ausgestaltung eines erfindungsgemäßen Verfahrens mit duroplastischen Matrixwerkstoffen ausgeführt, beispielsweise in einem Harz-Injektions-Verfahren (resin transfer molding, RTM). Eine besonders breite Einsetzbarkeit eines erfindungsgemäßen Verfahrens ist somit ermöglicht.

Gemäß einem zweiten Aspekt wird die Aufgabe durch einen Einleger zumindest umfassend einen Faserverbundwerkstoff für ein Spritzgussbauteil, wobei der Einleger zumindest ein Stützelement aufweist, gelöst. Insbesondere ist ein erfindungsgemäßer Einleger dadurch gekennzeichnet, dass der Einleger durch ein Verfahren gemäß dem ersten Aspekt der Erfindung hergestellt ist. Sämtliche Vorteile, die zu einem Verfahren zur Herstellung eines Einlegers für ein Spritzgussbauteil gemäß dem ersten Aspekt der Erfindung beschrieben worden sind, ergeben sich somit selbstverständlich auch für einen erfindungsgemäßen Einleger, der durch ein derartiges Verfahren hergestellt ist.

Ferner kann bei einem erfindungsgemäßen Einleger vorgesehen sein, dass das zumindest eine Stützelement bei einem Spritzgussvorgang zur Herstellung des Spritzgussbauteils in einem Spritzgussformwerkzeug zum Kontaktieren des Spritzgussformwerkzeugs ausgebildet ist. Auf diese Weise kann besonders einfach sichergestellt werden, dass der Einleger im Spritzgussformwerkzeug formschlüssig gehalten ist. Ein Verschwimmen des Einlegers während des Spritzgussvorgangs kann so sicher vermieden werden.

In einer besonders bevorzugten Weiterentwicklung kann darüber hinaus ein erfindungsgemäßer Einleger dahingehend ausgestaltet sein, dass das zumindest eine Stützelement zum Positionieren, insbesondere Zentrieren und/oder Fixieren, des Einlegers im Spritzgussformwerkzeug während des Spritzgussvorgangs ausgebildet ist. Auf diese Weise kann das Einbringen des Einlegers in das Spritzgussformwerkzeug vereinfacht werden. Eine exakte Positionierung, insbesondere eine Zentrierung, des Einlegers beim Einbringen ist nicht erforderlich. Ferner kann insbesondere durch die exakte Positionierung auch eine Fixierung des Einlegers im Spritzgussformwerkzeug erreicht werden. Durch den erfindungsgemäßen Einleger, insbesondere durch das zumindest eine Stützelement, wird das Einbringen dahingehend unterstützt, dass der Einleger quasi von selbst in die vorgesehene Position innerhalb des Spritzgussformwerkzeugs gelangt und dort auch fixiert verbleibt. Durch diese Vereinfachung kann die Herstellung des resultierenden Spritzgussbauteils beschleunigt und damit kostengünstiger durchgeführt werden.

Gemäß einem dritten Aspekt wird die Aufgabe durch ein Spritzgussbauteil aufweisend einen Einleger, wobei der Einleger zumindest einen Faserverbundwerkstoff umfasst und zumindest ein Stützelement aufweist, gelöst. Insbesondere ist ein erfindungsgemäßes Spritzgussbauteil dadurch gekennzeichnet, dass der Einleger gemäß dem zweiten Aspekt der Erfindung hergestellt ist. Sämtliche Vorteile, die zu einem Einleger gemäß dem zweiten Aspekt der Erfindung, und damit auch zu einem Verfahren zur Herstellung eines Einlegers für ein Spritzgussbauteil gemäß dem ersten Aspekt der Erfindung beschrieben worden sind, ergeben sich somit selbstverständlich auch für ein erfindungsgemäßes Spritzgussbauteil, das einen derartigen Einleger aufweist.

### BEVORZUGTE AUSFÜHRUNGSBEISPIELE

Das erfindungsgemäße Verfahren, der erfindungsgemäße Einleger sowie das erfindungsgemäße Spritzgussbauteil und deren Weiterbildungen sowie deren Vorteile werden nachfolgend anhand von Zeichnungen näher erläutert. Es zeigen jeweils schematisch:
- Figur 1: einen Schritt eines ersten Formgebungsverfahrens bei der Herstellung eines erfindungsgemäßen Einlegers,
- Figur 2: einen Schritt eines zweiten Formgebungsverfahrens bei der Herstellung eines erfindungsgemäßen Einlegers,
- Figur 3a bis 6a: eine erste Seitenansicht möglicher erfindungsgemäßer Einleger,
- Figur 3b bis 6b: eine zweite Seitenansicht möglicher erfindungsgemäßer Einleger,
- Figur 7a: einen erfindungsgemäßen Einleger beim Einbringen in ein Spritzgussformwerkzeug,
- Figur 7b: ein Spritzgussformwerkzeug mit eingebrachtem erfindungsgemäßen Einleger und
- Figur 8: ein erfindungsgemäßes Spritzgussbauteil.

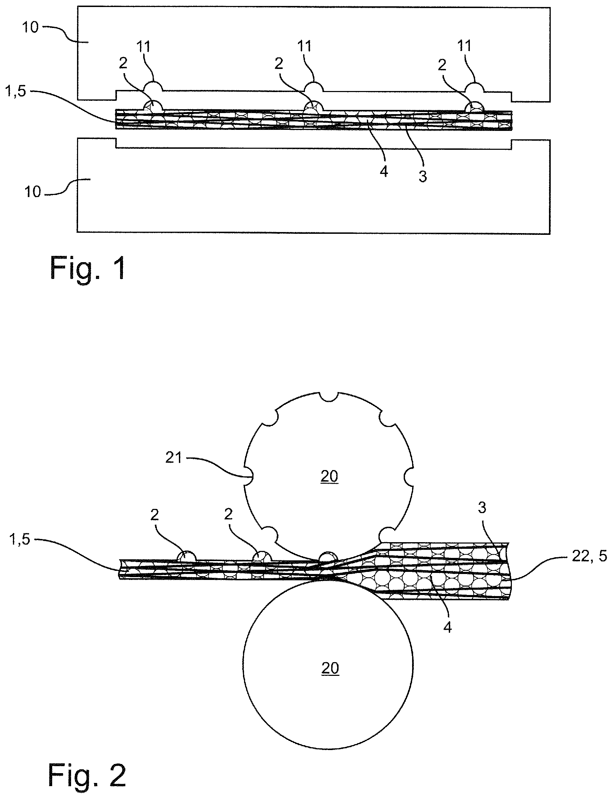

Elemente mit gleicher Funktion und Wirkungsweise sind in den Figuren 1 bis 8 jeweils mit denselben Bezugszeichen versehen.

In Fig. 1 ist ein Schritt eines ersten Formgebungsverfahrens bei der Herstellung eines erfindungsgemäßen Einlegers 1 gezeigt. Abgebildet ist insbesondere der abschließende Schritt des Formgebungsverfahrens. Die Formgebung zur Herstellung des Einlegers 1, bei der Fasern 3 und Matrixwerkstoff 4 in das Formwerkzeug 10 eingefüllt werden und dann zusammen im dann geschlossenen Formwerkzeug 10 aushärten, wurde bereits durchgeführt und der Einleger 1 ist fertiggestellt. Als ein derartiges Verfahren kann beispielsweise ein Harz-Injektions-Verfahren (resin transfer molding, RTM) durchgeführt werden. Abgebildet ist ein Formwerkzeug 10, das zwei Abschnitte aufweist. Die beiden Abschnitte des Formwerkzeugs 10 sind geöffnet, um den fertigen Einleger 1 aus dem Formwerkzeug 10 entnehmen zu können. Einer der beiden Abschnitte des Formwerkzeugs 10 weist Einbuchtungen 11 auf. Bei dem durchgeführten Formgebungsverfahren wurde in dem Formwerkzeug aus Fasern 3 und Matrixwerkstoff 4 ein Einleger 1 aus einem Faserverbundstoff 5 gebildet. Der Matrixwerkstoff 4 wurde dabei gleichzeitig dazu genutzt, die Einbuchtungen 11 im Formwerkzeug 10 auszufüllen. Nach dem Aushärten des Matrixwerkstoffs 4 bildet der Matrixwerkstoff 4 in diesen Einbuchtungen 11 des Formwerkzeugs 10 die Stützelemente 2 des fertigen Einlegers 1. Somit ist es möglich, bereits bei dem Formgebungsverfahren, in dem der Einleger 1 hergestellt wird, die Stützelemente 2 des Einlegers 1 anzuformen. Die Stützelemente 2 sind somit einstückig mit dem Einleger 1 und darüber hinaus monolithisch mit diesem hergestellt. Weitere Fertigungsschritte können so vermieden werden. In der abgebildeten Ausführungsform des Formwerkzeugs 10 sind die Einbuchtungen 11 rund ausgeführt. Selbstverständlich sind in alternativen Ausführungsformen des Formwerkzeugs 10 auch andere Geometrien für die Einbuchtungen 11 denkbar um die jeweils benötigten Formen der Stützelemente 2 am Einleger 1 anzuformen.

Fig. 2 zeigt ein zweites Formgebungsverfahren bei der Herstellung eines erfindungsgemäßen Einlegers 1. Dieses alternative Formgebungsverfahren eignet sich besonders für Rohlinge 22 aus einem noch formbaren Faserverbundwerkstoff 5. Der formbare Rohling 22, bestehend aus Fasern 3 und einem Matrixwerkstoff 4, wird einem Presswerkzeug 20 zugeführt. Das abgebildete Presswerkzeug 20 weist zwei sich drehende Walzen auf. Zwischen diesen beiden Walzen des Presswerkzeugs 20 wird der formbare Rohling 22 zusammengepresst um den Einleger 1 zu formen. Bei Verwendung eines thermoplastischen Matrixwerkstoffs 4 kann insbesondere zusätzlich vorgesehen sein, zumindest eine der beiden Walzen des Presswerkzeugs 20 zu erhitzen, um den thermoplastischen Matrixwerkstoff 4 aufzuschmelzen. Nach Abkühlung und/oder Aushärtung des Matrixwerkstoffs 4 ist das Formgebungsverfahren zur Herstellung des Einlegers 1 abgeschlossen. In der abgebildeten Ausgestaltungsform ist eine der beiden Walzen des Presswerkzeugs 20 mit Vertiefungen 21 ausgestattet. Beim Verpressen des Rohlings 22 werden diese Vertiefungen 21 mit Matrixwerkstoff 4 ausgefüllt. Nach der Abkühlung und/oder Aushärtung des Matrixwerkstoffs 4 bilden diese Bereiche die Stützelemente 2 des erfindungsgemäßen Einlegers 1. Somit ist es auch bei dieser alternativen Herstellung eines erfindungsgemäßen Einlegers 1 möglich, bereits bei dem Formgebungsverfahren, in dem der Einleger 1 hergestellt wird, die Stützelemente 2 des Einlegers 1 anzuformen. Die Stützelemente 2 sind somit einstückig mit dem Einleger 1 und darüber hinaus monolithisch mit diesem hergestellt. Weitere Fertigungsschritte können so vermieden werden. In der abgebildeten Ausführungsform des Presswerkzeugs 20 sind die Vertiefungen 21 rund ausgeführt. Selbstverständlich sind in alternativen Ausführungsformen des Presswerkzeugs 20 auch andere Geometrien für die Vertiefungen 21 denkbar um die jeweils benötigten Formen der Stützelemente 2 am Einleger 1 anzuformen. Darüber hinaus ist auch möglich, alternativ oder zusätzlich einen oder mehrere Vorsprünge am Presswerkzeug 20 vorzusehen. Diese Vorsprünge können sich dann beim Verpressen durch den Rohling 22 durchdrücken und somit auf der entgegengesetzten Seite des gefertigten Einlegers 1 ein Stützelement 2 anformen. Durch die Verwendung von Walzen ist die Herstellung von beliebig langen Einlegern 1 in einem kontinuierlichen Pressvorgang ermöglicht. Selbstverständlich sind auch andere Pressverfahren, insbesondere semi-kontinuierliche Pressverfahren, möglich, bei dem sequentiell die zu verpressenden Rohlinge 22 in das Presswerkzeug 20 eingelegt werden. Nach jedem Pressvorgang kann in diesem Fall beispielsweise aus einem Rohling 22 jeweils ein oder mehrere Einleger 1 gefertigt werden. Insbesondere Einleger 1 mit verwinkelten Geometrien können auf diese Weise hergestellt werden.

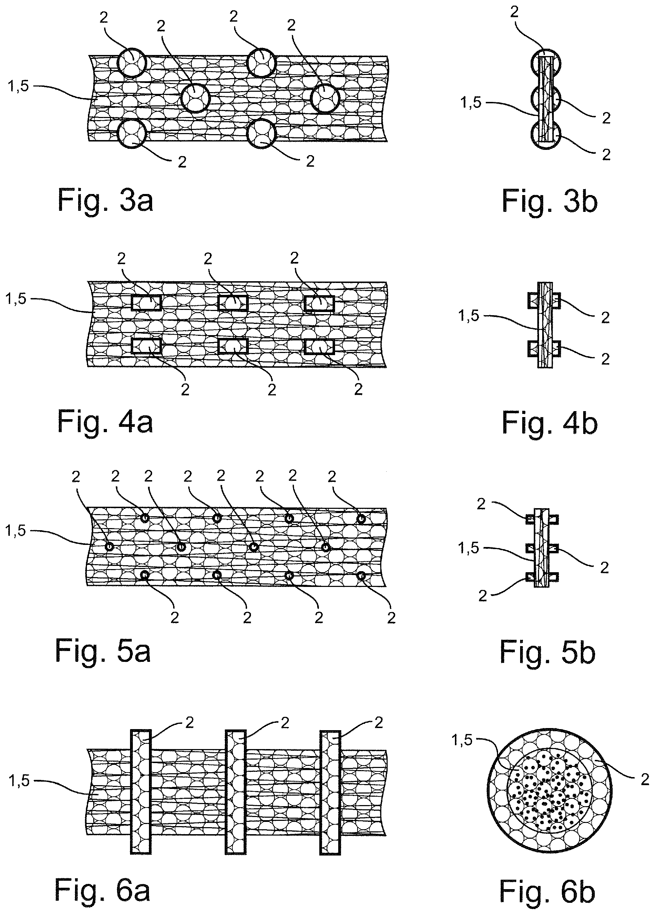

In den Fig. 3 bis 6 sind jeweils mögliche Ausgestaltungsformen von erfindungsgemäßen Einlegern 1 gezeigt. Dabei zeigen die Fig. 3a bis 6a jeweils eine erste Seitenansicht und die Fig. 3b bis 6b eine zweite Seitenansicht, die im Bezug zur ersten Seitenansicht um 90° gedreht ist.

Die Fig. 3 bis 5 zeigen jeweils flächige Einleger 1 aus einem Faserverbundwerkstoff 5. Die Fig. 6 zeigt einen Einleger 1 mit einer stabförmigen Geometrie. An die Einleger 1 sind jeweils mehrere Stützelementen 2 angeformt. In Fig. 3 sind die Stützelemente 2 als Kugelsegmente realisiert. Insbesondere in Fig. 3b ist sichtbar, dass die Stützelemente 2 beispielsweise eine komplette Kante des Einlegers 1 überdecken können. Fig. 4 zeigt quaderförmige, Fig. 5 zylindrische Stützelemente 2. Die Stützelemente 2, die in Fig. 6 gezeigt werden, sind ebenfalls zylindrisch und umgeben ringförmig den stabförmigen Einleger 1. Selbstverständlich sind auch andere Geometrien der Stützelemente 2 denkbar, wobei auch mehrere Stützelemente 2 mit verschiedenen Formen an einem Einleger 1 vorgesehen sein können. Anzahl, Art, Form und Position des oder der Stützelemente(s) 2 sind dabei vorteilhafterweise derart gewählt, dass durch das zumindest eine Stützelement 2 die Produktion des Spritzgussbauteil 30s (nicht mit abgebildet) vereinfacht werden kann. Dies beinhaltet beispielsweise, dass das zumindest eine Stützelement 2 derart an den Einleger 1 angeformt ist, dass es zum Kontaktieren des Spritzgussformwerkzeugs 31 (nicht mit abgebildet) und damit zum Positionieren, insbesondere Zentrieren und Fixieren, des Einlegers 1 Spritzgussformwerkzeug 31 ausgebildet ist.

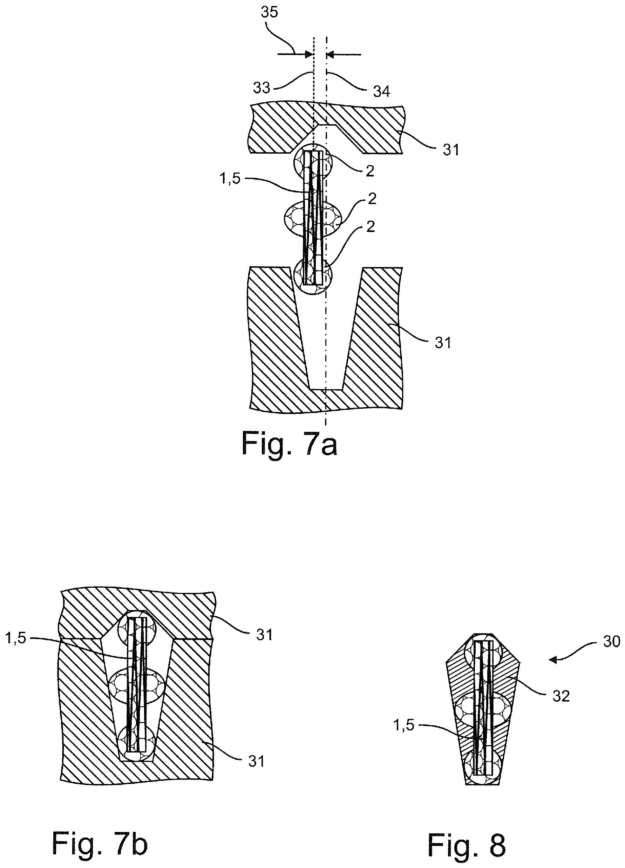

Dies wird insbesondere in der Fig. 7 gezeigt, wobei in Fig. 7a ein Einbringen eines erfindungsgemäßen Einlegers 1 in ein Spritzgussformwerkzeugs 31 und in Fig. 7b ein in ein Spritzgussformwerkzeug 31 bereits eingebrachter Einleger 1 dargestellt ist. Der Einleger weist dabei jeweils einen Faserverbundwerkstoff 5 auf. Fig. 7a zeigt deutlich den Vorteil der automatischen Positionierung und Zentrierung eines erfindungsgemäßen Einlegers 1 in ein Spritzgussformwerkzeug 31 durch die am Einleger 1 angeformten Stützelemente 2. Das Spritzgussformwerkzeug 31 ist zweiteilig und geöffnet dargestellt. Die Achse 33 des Einlegers 1 liegt nicht auf der Achse 34 des Spritzgussformwerkzeugs 31. Ohne die Stützelemente 1 wäre es nötig, die beiden Achsen 33, 34 aufwendig aufeinander auszurichten. Dadurch, dass die Stützelemente 2 an die Form des Spritzgussformwerkzeugs 31 angepasst sind, wird dieser Vorgang automatisch durchgeführt, ohne dass es einer aufwendigen externen Ausrichtung bedarf.

Das Ergebnis des Einbringens ist in Fig. 7b gezeigt. Das Spritzgussformwerkzeug 31 ist geschlossen und der Einleger 1 liegt, positioniert und zentriert durch die Stützelemente 2, in seiner vorgesehenen Position. Zwischen den Stützelementen 2 und dem Spritzgussformwerkzeug 31 bilden sich Formschlüsse, die den Einleger 1 auch beim Umspritzen mit Spritzgussmaterial 32 (nicht mit abgebildet) in Position halten. Ein Verschwimmen des Einlegers 1 beim Spritzgussvorgang kann so sicher vermieden werden. Eine Fixierung des Einlegers 1 durch bewegliche Teile oder Vorsprünge des Spritzgussformwerkzeugs 31 ist nicht notwendig. Das Spritzgussformwerkzeug 31 kann daher einfacher und somit kostengünstiger gefertigt und betrieben werden. Darüber hinaus sind auch Einschränkungen in der Gestaltung des Spritzgussbauteils 30 aufgrund von Fixierungsaufgaben des Spritzgussformwerkzeugs 31 nicht mehr vorhanden. So ist zum Beispiel eine ebene Gestaltung der Außenkontur des resultierenden Spritzgussbauteils 30 möglich. Kerbspannungen an Kanten, die durch Vorsprünge am Spritzgussformwerkzeug 31 entstehen, können so vermieden werden.

Fig. 8 zeigt ein erfindungsgemäßes Spritzgussbauteil 30. Der Einleger 1 aus Faserverbundwerkstoff 5 ist mit Spritzgussmaterial 32 umspritzt. Durch die Stützelemente 2 ist die effektive Fläche zwischen Einleger 1 und Spritzgussmaterial 32 erhöht. Die Festigkeit der Verbindung zwischen dem Einleger 1 und dem Spritzgussmaterial 32 kann dadurch erhöht werden. Das resultierende Spritzgussbauteil 30 gewinnt dadurch an Festigkeit. Ferner wird auch ein kaltes Umspritzen des Einlegers 1 zum Spritzgussbauteil 30 ermöglicht, da die Stützelemente 2 mit dem Spritzgussmaterial 32 einen Formschluss bilden. Ein Stoffschluss zwischen Einleger 1 und Spritzgussmaterial 32, für das zum Beispiel ein Aufschmelzen der Oberfläche des Einlegers 1 bei einem Spritzgussverfahren bei hohen Temperaturen nötig ist, ist somit nicht mehr erforderlich. Dies stellt eine deutliche Vereinfachung der Herstellung des resultierenden Spritzgussbauteils 30 dar.

### Bezugszeichenliste

- 1: Einleger
- 2: Stützelement
- 3: Fasern
- 4: Matrixwerkstoff
- 5: Faserverbundwerkstoff

- 10: Formwerkzeug
- 11: Einbuchtung

- 20: Presswerkzeug
- 21: Vertiefung
- 22: Rohling

- 30: Spritzgussbauteil
- 31: Spritzgussformwerkzeug
- 32: Spritzgussmaterial
- 33: Achse Einleger
- 34: Achse Spritzgussformwerkzeug
- 35: Versatz

## Patentansprüche

1. Verfahren zur Herstellung eines Einlegers (1) für ein Spritzgussbauteil (30) mittels eines Formgebungsverfahrens, wobei der Einleger (1) zur Herstellung des Spritzgussbauteils (30) mit Spritzgussmaterial (32) umspritzbar ist, der Einleger (1) zumindest umfassend einen Faserverbundwerkstoff (5), **dadurch gekennzeichnet, dass** beim Formgebungsverfahren dem Einleger (1) zumindest ein Stützelement (2) zum formschlüssigen Halten des Einlegers in einem Spritzgussformwerkzeug (31) angeformt wird,
wobei das zumindest eine Stützelement (2) beim Formgebungsverfahren monolithisch angeformt wird und zumindest teilweise aus Komponenten des Einleger (1) ausgebildet wird.

2. Verfahren nach Anspruch 1, **dadurch gekennzeichnet, dass** ein verformbarer Faserverbundwerkstoff (5) aus Fasern (3) und einem Matrixwerkstoff (4), insbesondere einem thermoplastischen oder duroplastischen Matrixwerkstoff (4), als Rohling (22) verwendet wird und dass an den Rohling (22) das zumindest eine Stützelement (2) durch Verpressen mit wenigstens einem Presswerkzeug (20) angeformt wird, wobei das wenigstens eine Presswerkzeug (20) zur Anformung des zumindest einen Stützelements (2) zumindest eine Vertiefung (21) und/oder einen Vorsprung aufweist.

3. Verfahren nach Anspruch 2, **dadurch gekennzeichnet, dass** das Verpressen ein semi-kontinuierliches oder kontinuierliches Verpressen ist.

4. Verfahren nach einem der Ansprüche 2 oder 3 **dadurch gekennzeichnet, dass** vor dem Verpressen zusätzlich eine verpressbare Kunststoffschicht auf eine Oberfläche des Rohlings (22) aufgebracht wird.

5. Verfahren nach Anspruch 1, **dadurch gekennzeichnet, dass** Fasern (3) in ein Formwerkzeug (10) mit zumindest einer Einbuchtung (11) eingelegt werden und mit einem Matrixwerkstoff (4), insbesondere einem thermoplastischen oder duroplastischen Matrixwerkstoff (4), umgossen werden, wobei das zumindest eine Stützelement (2) durch Ausfüllen der zumindest einen Einbuchtung (11) mit dem Matrixwerkstoff (4) gebildet wird.

6. Einleger (1) zumindest umfassend einen Faserverbundwerkstoff (5) für ein Spritzgussbauteil (30), wobei der Einleger (1) zumindest ein Stützelement (2) aufweist, **dadurch gekennzeichnet, dass** der Einleger (1) durch ein Verfahren gemäß einem der Ansprüche 1 bis 5 hergestellt ist.

7. Einleger (1) nach Anspruch 6, **dadurch gekennzeichnet, dass** das zumindest eine Stützelement (2) bei einem Spritzgussvorgang zur Herstellung des Spritzgussbauteils (30) in einem Spritzgussformwerkzeug (31) zum Kontaktieren des Spritzgussformwerkzeugs (31) ausgebildet ist.

8. Einleger (1) nach Anspruch 7, **dadurch gekennzeichnet, dass** das zumindest eine Stützelement (2) zum Positionieren, insbesondere Zentrieren und/oder Fixieren, des Einlegers (1) im Spritzgussformwerkzeug (31) während des Spritzgussvorgangs ausgebildet ist.

9. Spritzgussbauteil (30), aufweisend einen Einleger (1), wobei der Einleger (1) zumindest einen Faserverbundwerkstoff (5) umfasst und zumindest ein Stützelement (2) aufweist, **dadurch gekennzeichnet, dass** der Einleger (1) gemäß einem der Ansprüche 6 bis 8 ausgestaltet ist.

## Claims

1. A method for producing an insert (1) for an injection-moulded component (30) by means of a shaping process, wherein the insert (1) for producing the injection-moulded component (30) can be encapsulated with injection-moulding material (32), the insert (1) at least comprising a fibre composite material (5), **characterised in that** during the shaping process at least one supporting element (2) for holding the insert in an injection-moulding tool (31) in positive manner is formed onto the insert (1),
wherein the at least one supporting element (2) is formed on monolithically during the shaping process and is formed at least partly from components of the insert (1).

2. A method according to Claim 1, **characterised in that** a deformable fibre composite material (5) made of fibres (3) and a matrix material (4), especially a thermoplastic or thermoset matrix material (4), is used as a blank (22), and **in that** the at least one supporting element (2) is formed onto the blank (22) by press moulding with at least one compression mould (20), wherein the at least one compression mould (20) has at least one recess (21) and/or one protrusion for forming on the at least one supporting element (2).

3. A method according to Claim 2, **characterised in that** the press moulding is semi-continuous or continuous press moulding.

4. A method according to one of Claims 2 or 3, **characterised in that** prior to the press moulding additionally a press-mouldable plastics-material layer is applied to one surface of the blank (22).

5. A method according to Claim 1, **characterised in that** fibres (3) are laid in a forming die (10) with at least one indentation (11) and have a matrix material (4), especially a thermoplastic or thermoset matrix material (4), poured round them, wherein the at least one supporting element (2) is formed by filling the at least one indentation (11) with the matrix material (4).

6. An insert (1) at least comprising a fibre composite material (5) for an injection-moulded component (30), wherein the insert (1) has at least one supporting element (2), **characterised in that** the insert (1) is produced by a method according to one of Claims 1 to 5.

7. An insert (1) according to Claim 6, **characterised in that** the at least one supporting element (2) in an injection-moulding operation for producing the injection-moulded component (30) is formed in an injection-moulding tool (31) for contacting the injection-moulding tool (31).

8. An insert (1) according to Claim 7, **characterised in that** the at least one supporting element (2) is designed for positioning, especially centring and/or fixing, the insert (1) in the injection-moulding tool (31) during the injection-moulding operation.

9. An injection-moulded component (30), having an insert (1), wherein the insert (1) comprises at least one fibre composite material (5) and has at least one supporting element (2), **characterised in that** the insert (1) is configured according to one of Claims 6 to 8.

## Revendications

1. Procédé d'obtention d'un insert (1) pour une pièce moulée par injection (30) par un procédé de formage, pour permettre l'obtention de la pièce moulée par injection (30) l'insert (1) pouvant être enrobé par injection avec un matériau de moulage par injection (32), l'insert (1) renfermant au moins un matériau composite renforcé par des fibres (5), **caractérisé en ce que**
lors du procédé de formage de l'insert (1) au moins un élément de support (2) est formé pour permettre de maintenir l'insert dans un outil de moulage par injection (31), par une liaison par la forme,
lors du procédé de formage, l'élément de support (2) étant formé de façon monolithique et étant réalisé au moins partiellement à partir des composants de l'insert (1).

2. Procédé conforme à la revendication 1,
**caractérisé en ce qu'**
on utilise en tant qu'ébauche (22) un matériau composite renforcé par des fibres déformable (5) renfermant des fibres (3) et un matériau formant matrice (4), en particulier un matériau formant matrice (4) thermoplastique ou thermodurcissable, et, l'élément de support (2) est formé sur l'ébauche (22) par compression avec au moins un outil de moulage par compression (20), l'outil de moulage par compression (20) comprenant, pour permettre de former l'élément de support (2) au moins une cavité (21) et/ou au moins une saillie.

3. Procédé conforme à la revendication 2,
**caractérisé en ce que**
la compression est une compression semi-continue ou continue.

4. Procédé conforme à l'une des revendications 2 et 3,
**caractérisé en ce qu'**
avant la compression, une couche de matériau synthétique comprimable est tout d'abord appliquée sur une surface de l'ébauche (22).

5. Procédé conforme à la revendication 1,
**caractérisé en ce que**
des fibres (3) sont insérées dans un outil de moulage (10) comprenant au moins un renfoncement (11), et sont entourées par surmoulage avec un matériau formant matrice (4), en particulier un matériau formant matrice (4) thermoplastique ou thermodurcissable, l'élément de support (2) étant formé par remplissage de la cavité (11) avec le matériau formant matrice (4).

6. Insert (1) renfermant au moins un matériau composite renforcé par des fibres (5) destiné à une pièce moulée par injection (30), l'insert (1) comprenant au moins un élément de support (2),
**caractérisé en ce que**
l'insert (1) est obtenu par la mise en oeuvre d'un procédé conforme à l'une des revendications 1 à 5.

7. Insert (1) conforme à la revendication 6,
**caractérisé en ce que**
lors d'un processus de moulage par injection permettant d'obtenir la pièce moulée par injection (30), dans un outil de moulage par injection (31), l'élément de support (2) est formé pour venir en contact avec l'outil de moulage par injection (31).

8. Insert (1) conforme à la revendication 7,
**caractérisé en ce que**
l'élément de support (2) est formé pour permettre de positionner en particulier de centrer et/ou de fixer l'insert (1) dans l'outil de moulage par injection (31) pendant le procédé de moulage par injection.

9. Pièce moulée par injection (30) comprenant un insert (1), l'insert (1) comprenant au moins un matériau composite renforcé par des fibres (5) et au moins un élément de support (2),
**caractérisée en ce que**
l'insert (1) est réalisé conformément à l'une des revendications 6 à 8.
